# EUROPÄISCHE PATENTSCHRIFT

(11) **EP 0 961 802 B1**
(45) Veröffentlichungstag und Bekanntmachung des Hinweises auf die Patenterteilung: **06.05.2004**
(21) Anmeldenummer: 98912315.3
(22) Anmeldetag: 17.02.1998
(51) Int. Cl.: C08G 65/30

(54) **VERFAHREN ZUR GEWINNUNG VON POLYTETRAMETHYLENETHERGLYKOLEN MIT ENGER MOLMASSENVERTEILUNG**
METHOD FOR OBTAINING POLYTETRAMETHYLENE ETHER GLYCOLS WITH NARROW MOLAR-MASS DISTRIBUTION
MODE D'OBTENTION DE POLYTETRAMETHYLENE-ETHERGLUCOLS A DISTRIBUTION ETROITE DES MASSES MOLAIRES

(30) Priorität: 19.02.1997 DE 19706331
(43) Veröffentlichungstag der Anmeldung: 08.12.1999
(73) Patentinhaber: Korea PTG Co., Ltd., Ulsan, 680-150 (KR)
(72) Erfinder: Müller, Herbert, 67227 Frankenthal (DE)
(74) Vertreter: Weiss, Wolfgang, Dipl.-Chem. Dr.
(86) Internationale Anmeldenummer: PCT/EP1998/000886
(87) Internationale Veröffentlichungsnummer: WO 1998/037121

(56) Entgegenhaltungen:
- EP-A- 0 236 995
- EP-A- 0 305 853
- US-A- 5 053 553

## Beschreibung

Die vorliegende Erfindung beschreibt ein neues, fortschrittliches Verfahren Polytetrahydrofuran (PTHF) und Copolymere des Tetrahydrofurans mit Alkylenoxiden durch eine Lösungsmittelgemisch-Behandlung in Produkte mit enger Molmassenverteilung zu überführen. Die Lösungsmittelmischung besteht aus Methanol, einem Cycloaliphaten und Wasser.

Polytetrahydrofuran (PTHF) ist z.B. ein wichtiges Zwischenprodukt für die Herstellung von Polyurethanen oder Polyestern mit Weichsegmenten und wird in der Monographie "Polytetrahydrofuran" von P. Dreyfus, Gordon and Breach Science Publishers, New York, London, Paris 1982, behandelt. PTHF wird üblicherweise durch kationische Polymerisation mit einer ziemlich breiten Molmassenverteilung erhalten, die meist von der Gauß'schen Normalverteilung abweicht.

Die Polydispersität eines Polymers wird durch den Quotienten M_{w}/Mₙ charakterisiert, wobei M_{w} das Gewichts- und Mₙ das Zahlenmittel der Molekularmasse angibt. Der Quotient M_{w}/Mₙ wird meist als das Ergebnis einer gelpermationschromatographischen Messung im Vergleich zu der Verteilung von Eichsubstanzen ermittelt. Der Quotient läßt sich auch von der empirischen Formel Mᵥᵢₛ/Mₙ, wie sie in der Deutschen Patentschrift DE-2453114 angegeben ist, ableiten. Darin ist log Mᵥᵢₛ = 0,483 log viscosity (bei 40°C in poise) + 3.0646. Diese Beziehung steht mit der Tatsache im Zusammenhang, daß die Viskosität von Polymeren mit breiter Molmassenverteilung exponentiell mit der Molmasse ansteigt.

Polymere Endprodukte auf Basis von PTHF mit enger Molmassenverteilung besitzen durchweg ein höheres mechanisches Niveau als solche mit breiter Molmassenverteilung. Deshalb istes wünschenswert, eng verteilte Produkte bereits bei der Polymerisation zu erzeugen oder wenigstens nachträglich durch eine Nachbehandlung eine Verengung der Molmassenverteilung zu erreichen.

Die kanadische Patentanmeldung Nr. 800 659 lehrt, daß Polymere mit relativ enger Molmassenverteilung durch Abbruch der Polymerisation vor Erreichen des Gleichgewichtes erhalten werden können. Nach der Lehre des Deutschen Patents DE-PS 2 453 114 erreicht man eine Verringerung der Polydispersität durch einen partiellen Abbau der Polymere mit Hilfe von sauren Kationenaustauschern. Andere Patentanmeldungen, wie die US-PS 4,510,333 oder die Deutsche Patentschrift DE 4 205 984 beschreiben eine Polymerisation bei abgestufter Reaktionstemperatur, um eine Verengung der Molmassenverteilung zu erreichen. Diese Maßnahmen sind aufwendig, technisch schwierig auszuführen, kostenintensiv und meist nur begrenzt wirksam. Eine genaue Reproduzierbarkeit ist mit dem beschriebenen Verfahren kaum zu erreichen, so daß der Quotient M_{w}/Mₙ ständigen Schwankungen unterworfen ist. Eine hohe Reproduzierbarkeit der Polydispersität M_{w}/Mₙ ist jedoch für viele Anwendungen von PTHF bzw. THF-Copolymeren, insbesondere im Hinblick auf gewünschte Produkteigenschaften, unerläßlich.

In der US-PS 3,478,109 wird ein Verfahren zu Entfernung niedermolekularer Anteile durch Extraktion von polymeren Glykolen mit Methanol bzw. Methanol/Wasser beschrieben. Eine ausreichende Abtrennung niedermolekularer Anteile wird allerdings nur erreicht, wenn die polymeren Glykole als Lösung in einem Kohlenwasserstoff der Extraktion unterworfen werden. Diese Methode liefert nur im Falle einer kontinuierlichen oder mehrstufigen diskontinuierlichen Extraktion polymerer Glykole die für die Herstellung von z.B. Spandex-Faser geeigneten Diole. Ähnlich unbefriedigend sind die Ergebnisse zur Herstellung engverteilter THF-Polymere nach den Lehren der japanischen Patentanmeldung, Offenlegung Nr. 60-42421, oder Polymer nach den Lehren der japanischen Patentanmeldung, Offenlegung 60-42-421, oder der japanischen Anmeldung Nr. 215 111/83. Die dort beschriebenen Methoden sind insbesondere zur Herstellung engverteilter Copolymere mit mehr als 5 Gew.-% Ethylen- oder Propylenoxid weniger geeignet. Dies gilt auch für das Verfahren, das die US-PS 4,762,951 beschreibt, und das auf einem komplizierten dreiphasigen System beruht, aber bei Copolymeren mit hohem Alkylenoxidgehalt (> 30 Gew.-%) versagt.

In der US-PS 4,933,503 wird ein extraktives Verfahren zur Herstellung eng verteilter PTHF-Polymere beschrieben, bei dem eine durch Kurzwegdestillation bei 200-260°C und bei einem Druck < 0,3 mbar von niedermolekularen Anteilen befreites Polymer mit einem Kohlenwasserstoff, Methanol und Wasser gemischt werden. Dieser Prozeß liefert nur für den Fall, daß sich ein dreiphasiges System ausbildet, zufriedenstellende Ergebnisse. Im Gegensatz hierzu ist das erfindungsgemäße Verfahren dadurch ausgezeichnet, daß man bereits durch das einfachere Zweiphasensystem Polymerisate mit einem sehr anspruchsvollen Eigenschaftsprofil erhält.

Alle diese Verfahren beruhen auf einem komplizierten, zumeist dreiphasigen System, wodurch hohe Anforderungen an den apparativen Aufbau und die Verfahrensführung gestellt werden.

Es war deshalb eine Aufgabe der vorliegenden Erfindung ein technisch einfaches und ökonomisch günstiges Verfahren zur Herstellung von eng verteilten PTHF-Polymeren zur Verfügung zu stellen, das es erlaubt, marktgängige Polymere in engverteilte Fraktionen aufzutrennen, die jeweils einer praktischen Anwendung zugeführt werden können, ohne daß Einschränkungen in Bezug auf Molekularmasse oder Copolymerengehalt gegeben sind.

Es war eine weitere Aufgabe der Erfindung, ein Verfahren zur Verengung der Molmassenverteilung zur Verfügung zu stellen, das ohne merkliche Verluste ein durch Katalysatoren nicht verunreinigtes Polymer, insbesondere im technisch interessanten Molmassenbereich zwischen 500 und 5000 Dalton zur Verfügung stellt. Die erfindungsgemäßen Polymere sollten darüber hinaus durch Kronenether höchstens geringfügig verunreinigt sein.

Diese Aufgaben werden erfindungsgemäß gelöst durch ein Verfahren zur Fraktionierung von Tetrahydrofuran-Polymeren oder Tetrahydrofuran-Alkylenoxid-Copolymeren, welches dadurch gekennzeichnet ist, dass man
(a) als Ausgangspolymer ein Tetrahydrofuran-Polymer oder Tetrahydrofuran-Alkylenoxid-Copolymer verwendet, welches durch Filmverdampfen im Vakuum bei einem Druck <5 mbar und einer Temperatur im Bereich von 170 bis 250 °C erhalten wurde,
(b) das Ausgangspolymer mit einem Cycloalkan (a), Methanol (b) und Wasser (c) bei einer Temperatur im Bereich von 0 °C bis 40 °C vermischt und
(c) die beim Mischen gebildeten zwei separaten Phasen bei einer Temperatur von 40 °C bis 80 °C voneinander in Fraktionen trennt, wobei die Polydispersität M_{w}/Mₙ der gewonnenen Produkt-Polymerfraktionen geringer ist als die Polydispersität M_{w}/Mₙ des Ausgangspolymers, und
wobei die Phasentrennung bei einer Temperatur erfolgt, die mindestens 10 °C höher ist, als die Mischtemperatur in Schritt (b).

Das erfindungsgemäße Verfahren eignet sich zum einen für die Auftrennung von Tetrahydrofuran-Polymeren. Solche Polymere werden üblicherweise durch kationische ringöffnende Polymerisation von Tetrahydrofuran (THF) gebildet, wobei Polyether entstehen. Diese werden oftmals auch als Polytetramethylenglykole(PTMG), Polytetramethylenglykoläther(PTMEG)oder Polytetramethylenoxid (PTMO) bezeichnet. Weiterhin ist das erfindungsgemäße Verfahren auch zur Auftrennung von Tetrahydrofuran-Alkylenoxid-Copolymeren geeignet. Bevorzugt werden statistische oder Blockcopolymere verwendet. Das Alkylenoxid stellt bevorzugt ein Alkylenoxid mit 1 bis 10 Kohlenstoffatomen, bevorzugt 1 bis 8 Kohlenstoffatomen und besonders bevorzugt 2 bis 5 Kohlenstoffatomen dar. Am meisten bevorzugt enthält das Copolymer Etylen- und/oder Propylenoxideinheiten.

Der Anteil an THF- und Alkylenoxidgruppen im Copolymer beträgt im allgemeinen 1:99 bis 99:1 (in mol %), bevorzugt 10:90 bis 90:10 (in mol %) und besonders bevorzugt von 20:80 bis 80:20 (in mol %). Mit dem erfindungsgemäßen Verfahren ist es insbesondere möglich, Copolymere mit einem hohen Alkylenoxidgehalt ≥ 20%, bevorzugt ≥ 30% und besonders bevorzugt ≥ 40% aufzutrennen.

Erfindungsgemäß wird das Ausgangspolymer mit einem Cycloalkan, Methanol und Wasser bei einer Temperatur im Bereich von 0°C und 40°C gemischt. Dieser Vorgang wird in der Beschreibung auch als Schritt (b) oder als Mischschritt bezeichnet. Grundsätzlich ist jedes Cycloalkan für das erfindungsgemäße Verfahren geeignet. Bevorzugt ist das Cycloalkan im angegebenen Temperaturbereich flüssig. Bevorzugt wird ein Cycloalkan mit 3-20, besonders bevorzugt 3-10, insbesondere 5-7 Kohlenstoffatomen verwendet. Die Kohlenstoffatome können dabei als Teil der Ringstruktur oder als Teil von Kohlenwasserstoffsubstituenten an der Ringstruktur vorliegen. Bevorzugt werden Cycloalkane mit einer C3-C8, besonders bevorzugt C3-C6 Ringstruktur, also Cyclopropane, Cyclobutane, Cyclopentane und Cyclohexane verwendet. Diese Cycloalkane können mit gesättigten Kohlenwasserstoffresten, insbesondere C1-C6 Kohlenwasserstoffresten wie Methyl, Ethyl, Propyl, Butyl, Pentyl oder Hexyl substitutiert sein. Besonders bevorzugt wird Cyclopentan, Methylcyclopentan, Cyclohexan oder/und Methylcyclohexan als Cycloalkan verwendet.

Nach dem Mischen des Ausgangspolymers mit dem Cycloalkan, dem Methanol und dem Wasser werden in einem darauffolgenden Schritt (c) (auch Trennschritt genannt) die beim Mischen gebildeten zwei Phasen, nämlich eine wässrige und eine organische Phase bei einer Temperatur von 40°C bis 80°C voneinander getrennt. Überraschenderweise wurde festgestellt, daß sich ein Ausgangspolymer mit breiter Molekulargewichtsverteilung in dem erfindungsgemäß verwendeten Lösungsmittelgemisch spezifisch hinsichtlich der Molekularmasse verteilt, so daß eine Fraktionierung des Ausgangspolymers hinsichtlich der Molekularmasse erfolgt.

Bei der Durchführung des erfindungsgemäßen Verfahrens bildet sich ein einfaches Zweiphasensystem aus.

Die gebildeten zwei Phasen können einfach durch herkömmliche Methoden der Phasentrennung voneinander getrennt werden, wobei eine Fraktion mit höherem und eine Fraktion mit niedrigerem mittleren Molekulargewicht erhalten werden. Überraschenderweise wurde festgestellt, daß die beiden gewonnenen Fraktionen eine deutlich geringere Polydispersität als das Ausgangsmaterial aufweisen.

Die Polydispersität M_{w}/Mₙ gibt die Einheitlichkeit eines Polymers an. Je geringer dieser Wert ist, d.h. je näher er sich dem Wert 1 annähert, desto motmasseinheitlicher istein Polymer. Mit dem erfindungsgemäßen Verfahren werden Tetrahydrofuran-Polymere oder Tetrahydrofuran-Alkylenoxid-Copolymere erhalten, die hinsichtlich ihrer Molmasse einheitlicher sind als die verwendeten Ausgangspolymere. Grundsätzlich können für das erfindungsgemäße Verfahren Ausgangspolymere mit einer beliebigen Polydispersität eingesetzt werden. Bevorzugt weisen die Ausgangspolymere eine relativ breite Polydispersität M_{w}/Mₙ von ≥ 1,5, insbesondere ≥ 2 oder ≥ 2,5 auf. Es können aber auch Ausgangspolymere mit einer sehr breiten Molekulargewichtsverteilung, beispielsweise einem M_{w}/Mₙ von ≥ 3, ≥ 5 oder ≥ 7 verwendet werden.

Durch das erfindungsgemäße Verfahren werden bevorzugt Polymerfraktionen erhalten, deren Polydispersität um mindestens 2% und bevorzugt mindestens 5% geringer ist als die Polydispersität des Ausgangsmaterials. Eine Verringerung um 5% bedeutet beispielsweise bei der Verwendung eines Ausgangspolymeren mit einer Polydispersität M_{w}/Mₙ von 2,0, daß die beiden durch das erfindungsgemäße Verfahren erhaltenen Polymerfraktionen jeweils eine Polydispersität von ≤ 1,9 aufweisen.

In einer bevorzugten Ausführungsform des erfindungsgemäßen Verfahrens trennt man ein Tetrahydrofuran-Polymer oder ein Tetrahydrofuran-Alkylenoxid-Copolymer in separate, insbesondere in zwei Fraktionen, die jeweils eine Polydispersität M_{w}/Mₙ aufweisen, die um mindestens 10% und besonders bevorzugt um mindestens 15% geringer ist als die Polydispersität M_{w}/Mₙ des Ausgangspolymers. Üblicherweise weisen Fraktionen mit der geringeren mittleren Molekularmasse eine geringere mittlere Dispersität auf als Fraktionen mit der höheren mittleren Molekularmasse.

Die erfindungsgemäße Aufspaltung in separate zwei Fraktionen hat zur Folge, daß umso engere Molekulargewichtsverteilungen der Fraktionen erhalten werden können, je geringer die Polydispersität des Ausgangsmaterials ist. Eine wiederholte Anwendung des erfindungsgemäßen Verfahrens führt damit zu Fraktionen mit immer weiter verengten Molekulargewichtsverteilungen.

Wie bereits ausgeführt, hängt die Polydispersität der erfindungsgemäß erhaltenen Polymerfraktionen von der Polydispersität des verwendeten Ausgangspolymers ab. Bevorzugt weisen die nach dem erfindungsgemäßen Verfahren erhältlichen Polymerfraktionen eine Molmassenverteilung auf, die einer Polydispersität M_{w}/Mₙ von 1,2 bis 2,6 entspricht. Bei einer Auftrennung in zwei Fraktionen wird der kleinere Bereich dabei der Polymerfraktion mit der kleineren Molmasse zugeordnet, der größere dem höhermolekularen Produkt. So weist die Fraktion mit der kleineren Molekularmasse bevorzugt eine Potydispersität von 1,2 bis 2,0 auf, während die Polydispersität der Polymerfraktion mit der größeren Molekularmasse bevorzugt im Bereich von 1,5 bis 2,6 liegt.

Es wurde insbesondere gefunden, daß Polymere und Copolymere mit den Molmassen M (in Dalton) in zwei verwertbare, sehr eng verteilte Fraktionen aufgespalten werden können, die die Molmassen von M + A und M - A (Dalton) aufweisen, wenn den Ausgangspolymeren ein Cycloalkan (a), Methanol (b) und Wasser (c) bei 0-40°C untergemischt werden und man die dabei entstandenen beiden Phasen bei Temperaturen von 40-80°C voneinander trennt. M liegt bevorzugt im Bereich von 800-3000 und A bevorzugt im Bereich von 200-1500 Dalton.

Im erfindungsgemäßen Verfahren kann ein THF-Homo- oder Copolymeres verwendet werden, das durch die konventionelle Homo- oder Copolymerisation mit kationischen Katalysatoren hergestellt wird.

Gemäß vorliegender Erfindung wird als Ausgangspolymer ein Tetrahydrofuranpolymer oder Tetrahydrofuran-Alkylenoxid-Copolymer verwendet, welches durch Filmverdampfen im Vakuum erhalten wird. Ein solches Filmverdampfen wird bei einem Druck < 5 mbar und einer Temperatur im Bereich von 170-250°C durchgeführt.

Das erfindungsgemäße Verfahren ist grundsätzlich hinsichtlich der Molekularmasse des Ausgangspolyers nicht begrenzt. Aus technischen Gesichtpunkten wird jedoch bevorzugt ein Ausgangspolymer mit einer mittleren Molekularmasse verwendet, welches > 500 Dalton, bevorzugt > 600 Dalton und insbesondere > 800 Dalton und < 10000 Dalton, bevorzugt < 5000 Dalton und besonders bevorzugt < 3000 Dalton ist. Der Bereich von 800-3000 Da ist von besonderem technischen Interesse.

Beim erfindungsgemäßen Verfahren erfolgt die Bildung von separaten 2 Phasen, in denen Fraktionen des Ausgangspolymers mit unterschiedlichem mittleren Molekulargewicht vorliegen. Beim erfindungsgemäßen Verfahren erfolgt eine Trennung in zwei Fraktionen, d.h. in eine Fraktion mit einer niedrigeren mittleren Molekularmasse als der des Ausgangspolymers und eine Fraktion mit einer höheren mittleren Molekularmasse als der des Ausgangspolymers. Bevorzugt wird das Verfahren derart durchgeführt, daß man das Ausgangspolymer durch eine im wesentlich symmetrische Aufspaltung in zwei Fraktionen trennt, deren mittlere Molekularmassen in etwa M + A und M-A betragen. M steht dabei für die mittlere Molmasse des Ausgangspolymers und beträgt mindestens 500 Da, bevorzugt mindestens 600 Da und besonders bevorzugt mindestens 800 Da und höchstens bevorzugt 10000 Da, mehr bevorzugt 5000 Da und am meisten bevorzugt 3000 Da. A hängt dabei von Ausgangspolymeren ab und beträgt bevorzugt 100-3000 Da, besonders bevorzugt 200-15000 Da. Neben der nahezu vollkommen symmetrischen Aufspaltung wird das Verfahren in einer weiteren bevorzugten Ausführungsform derart durchgeführt, daß die mittleren Molmassen der bei den erhaltenen Fraktionen im Bereich [M+A]±(0,1xM) bzw. [M-A]±(0,1xM) liegen.

Die Auftrennung der Molmasse kann durch geeignete Wahl der Cycloalkankomponente und geeignete Wahl der Mengenverhältnisse der Komponenten Ausgangspolymer, Cycloalkan, Methanol und Wasser beeinflußt werden, wobei Zusammensetzungen mit den gewünschten Trenneigenschaften vom Fachmann für das jeweilige Ausgangspolymer ohne weiteres durch einige wenige, einfache Vorversuche ermittelt werden können.

Im allgemeinen beträgt der Anteil von Cycloalkan (a), Methanol (b) und Wasser (c) in der Gesamtmischung, d.h. inklusive Ausgangspolymer, jeweils von 1-95%, bevorzugt von 5-90%.

Die Bestandteile (a), (b) und (c) werden bevorzugt im Verhältnis 1-10 Gewichtsteile (a) : 1-10 Gewichtsteile (b) : 1-10 Gewichtsteile (c) eingesetzt.

Bei einer besonders bevorzugten Ausführungsform des erfindungsgemäßen Verfahrens enthält das Lösungsmittelgemisch die Komponenten (a), (b) und (c) im ungefähren Gewichtsverhältnis 5:5:1 (d.h. 4-6 Gewichteile (a) : 4-6 Gewichtsteile (b) : 0,8-1,2 Gewichtsteile (c)). Da dieses Mengenverhältnis den Grad der Einengung der Molmassenverteilung und das Mengenverhältnis der gebildeten Phasen beeinflußt, ist es ratsam, durch wenige Vorversuche z.B. mit doppelter oder halber Alkohol- oder Wassermenge die Effektivität der Methode vorzutesten, um die gewünschte Verteilung zu erreichen. Die Veränderung der Cycloalkanmenge hat meist einen geringeren Einfluß und sollte im Bereich von 5-50 Gew.-% bezogen auf das Polymer gewählt werden.

Grundsätzlich kann das Cycloalkan in einer Menge von 0,2 Gewichtsteilen bis 5 Gewichtsteil pro Gewichtsteil des Ausgangspolymers verwendet werden. Bevorzugt wird das Cycloalkan in einer Menge von 1,5 bis 2,5 Gewichtsteite pro Gewichtsteil des Ausgangspolymers verwendet.

Die Mischung der Komponenten kann bei jeder zweckmäßigen Temperatur erfolgen, die mindestens 10°C, bevorzugt mindestens 20°C und besonders bevorzugt mindestens 30°C und höchstens 70°C, bevorzugt höchstens 60°C und besonders bevorzugt höchstens 50 °C niedriger als diejenige liegt, bei der die Phasentrennung vorgenommen wird. Sie wird so gewählt, daß sich zwei und nicht drei Phasen ausbilden. Durch Verändern des Mengenverhältnisses (a):(b):(c) kann die Bildung von zwei Phasen erreicht werden, falls das zu behandelnde Einsatzpolymere oder -copolymere durch die ursprüngliche Molmassenverteilung und/oder Zusammensetzung die Bildung von drei Phasen bewirken würde.

Das erfindungsgemäße Verfahren mit Cycloalkanen als Kohlenwasserstoffe erlaubt es, Polymere im weiten Molmassenbereich und Comonomerengehalt im zweiphasigen System sicher aufzubereiten. Beim Einsatz von aliphatischen oder aromatischen Kohlenwasserstoffen gelingt dies häufig nicht. Für das erfindungsgemäße Verfahren mit Cycloaliphaten bei unterschiedlicher Misch- und Phasenseparationstemperatur eignen sich Polymere, die durch Filmverdampfung bei hoher Temperatur (170-250°C) und gutem Vakuum (< 5 mbar) gewonnen wurden. Überraschend und abweichend vom bekannten Stand der Technik der US-PS 4,933,503 bilden sich bei dem vorliegenden Verfahren, keine drei sondern nur zwei Phasen aus.

Eine vorteilhafte Variante des erfindungsgemäßen Verfahrens trennt nach dem Mischen der Komponenten die entstandenen Phasen bei 40-80°C, insbesondere 50-80°C, gewinnt aus der unteren Phase die Fraktion mit der niedrigeren mittleren Molmasse, kühlt die obere Phase um 20-50°C ab, und führt erneut eine Phasentrennung bei der tieferen Temperatur durch. Dadurch gelingt es, den größten Teil des eingesetzten Cycloalkans zusammen mit 80-90% der im Einsatzprodukt vorhandenen Reste cyclischer Ether wie etwa Kronenether abzutrennen. Aus dieser verbleibenden Phase gewinnt man dann die höhermolekulare Molmassenfraktion z.B. durch Eindampfen.

Sowohl der höher- als auch der niedermolekulare Anteil der Polymeren zeichnen sich durch sehr kleine Zahlenwerte des Quotienten Mw/Mn aus. Die höhere Molekulargewichtsfraktion kann aus der oberen Phase der ursprünglichen Mischung und die niedermolekulare Fraktion aus der unteren Phase durch herkömmliche Verfahren, z.B. durch Eindampfen, vorteilhaft bei reduziertem Druck im Vakuum, isoliert werden. Die abgedampften Komponenten (a), (b) und (c) können in den Prozeß zurückgeführt werden, ohne daß eine vorherige Reinigung erforderlich wäre.

Durch den erfindungsgemäßen Prozeß ist es möglich, breit verteilte THF-Polymere in zwei Fraktionen zu trennen, von denen eine Fraktion eine höhere und die andere eine niedrigere mittlere Molmasse aufweist. Die Molmassen der beiden eng verteilten Polymere verhalten sich etwa 1:2 bis 2:1.

In einer weiteren bevorzugten Ausführungsform umfaßt die Erfindung ein Verfahren zum Aufspalten von breit verteiltem Tetrahydrofuranpolymeren oder Tetrahydrofuran-alkylenoxidcopolymeren, die durch Filmverdampfung (170-250°C, Druck < 5 mbar) erhalten wurden, mit der mittleren Molmasse M (Dalton) in zwei eng verteilte Polymerfraktionen mit den Molmassen M + A und M - A (Dalton) wobei 800 bis 3000, sowie A 200 bis 1500 Dalton bedeuten, durch Mischen bei 0-40°C der Ausgangspolymeren mit einem Cycloalkan (a), Methanol (b) und Wasser (c), und der Anteil der einzelnen Stoffe (a), (b) oder (c) in der Gesamtmischung 10-55 Gew.-% beträgt, welches dadurch gekennzeichnet ist, daß man die Aufspaltung durch Phasentrennung der beiden gebildeten Phasen bei 40-80°C vornimmt. Die breit verteilten Ausgangspolymeren oder -copolymeren werden durch Filmverdampfen im Vakuum bei Drucken unter 5 mbar bei 170-250°C gewonnen. Die bei der ersten Phasentrennung gewonnene leichte Phase kann weiterhin um 20-50°C abgekühlt und das Polymer aus der sich dabei bildenden unteren Phase gewonnen werden. Der Anteil des Cycloalkans (a) beträgt bevorzugt 20-30 Gew.-% bezogen auf das Polymer. Als Cycloalkan (a) werden hierbei insbesondere Cyclopentan, Methylcyclopentan, Cyclohexan oder Methylhexan verwendet. Bei dieser Ausführungsform erfolgt die Mischung der Einzelkomponenten bevorzugt bei einer 10-40°C tieferen Temperatur als die Phasentrennung. Das Copolymer des Tetrahydrofurans enthält bevorzugt Ethylen- und/oder Propylenoxideinheiten. Die Polymerfraktionen werden bevorzugt durch Eindampfen bei reduziertem Druck gewonnen, und die kondensierten Hilfstoffe (a), (b) und (c) können ohne weitere Reinigung erneut für die Molekulargewichtsfraktionierung eingesetzt werden.

Die Molmassenverteilung von Polytetrahydrofuran und Copolymeren von Tetrahydrofuran und Alkylenoxid wird dadurch verengt, daß die Polymeren mit einer Mischung aus einem Cycloaliphaten, Methanol und Wasser im Bereich von 0-40°C vermischt werden. Die beiden entstandenen Phasen werden bei 40-80°C getrennt, und die Polymeren mit enger Molekularmassenverteilung daraus isoliert.

In den folgenden Beispielen bedeuten "Teile" Gewichtsteile, die sich zu Volumenteile wie Kilogramm zu Liter verhalten.

### Beispiele

### Beispiel 1

In diesem Beispiel wird ein PTHF mit der Molmasse 2000 und der Polydispersität M_{w}/Mₙ = 2,4, das durch kontinuierliche Polymerisation am Festbettkatalysator gemäß der Lehre des PCT-Patentes WO96/33232 hergestellt und durch alkalische Umesterung und Eindampfen am Rotationsverdampfer bei 220°C, 1 mbar mit nachfolgender Kurzwegdestillation erhalten wurde, in zwei Fraktionen zerlegt.

In einem Mischgefäß werden stündlich 1 Teil PTHF mit der Molmasse 2000 Da mit ebenfalls stündlich 1,5 Teilen Methanol, 0,5 Teilen Wasser und 1,8 Teilen Cyclohexan kontinuierlich bei 35°C gemischt. Diese Mischung fließt kontinuierlich über einen Überlauf in ein Dekantiergefäß, das bei 65°C betrieben wird. Das Volumen des Dekantiergefäßes ist so groß, daß der Mischung eine Verweilzeit von 5 Stunden bleibt, während der sich zwei Phasen klar absetzen. Die Phasengrenze wird mit einem optisch oder mechanisch wirkenden Sensor (z.B. Schwimmer) erkannt und bei etwa 50 Vol.-% des Flüssigkeitsvolumens gehalten. Während die obere Phase durch einen freien Überlauf abgezogen wird, sorgt der Sensor, der die Phasengrcnze erkennt, für konstante Niveauhöhe der unteren Phase.

Stündlich erhält man ca. 2,6 Teile der oberen Phase und 2,2 Teile der unteren Phase. Die untere Phase wird direkt einer Vakuumfilmverdampfung (T = 180°C und p = 5 mbar) zugeführt. Die Filmverdampfung liefert stündlich 0,27 Teile PTHF mit der Molmasse 1000, das ca. 0,14 Gew.-% Kronenether enthält und den Heterogenitätsquotienten M_{w}/Mₙ = 1,4 besitzt. Außerdem fällt ein Lösungsmittelgemisch an, das aus 1,37 Teilen Methanol, 0,40 Teilen Wasser und 0,15 Teilen Cyclohexan besteht (gaschromatographische Analyse).

Die kontinuierlich abgezogene obere Phase des Dekantiergefäßes wird auf 15°C abgekühlt, einem zweiten Dekantiergefäß zugeführt, in dem diese während einer Verweilzeit von 2 Stunden in eine obere Cyclohexanphase und eine hochmolekulare PTHF-Phase separiert. Die Cyclohexanphase besteht aus 1,0 Gew.-% Methanol, 0,5 Gew.-% Wasser, 97,3 Gew.-% Cyclohexan und 1 Gew.-% Kronenether. Die PTHF-Phase besteht zu 95 Gew.-% aus dem höhermolekularen PTHF 3000 mit dem Heterogenitätsquotienten M_{w}/Mₙ = 2,1.

### Beispiel 2

1 Teil Polytetramethylenetherglykol (PTMEG), durch kationische Polymerisation am Bleicherdekatalysator K306 der Fa. Süd-Chemie AG, MÜnchen, in Gegenwart von Essigsäureanhydrid hergestellt und durch Umesterung und Vakuum-Filmverdampfung isoliert, wird bei 20°C mit einem Lösungsmittelgemisch aus 2 Teilen Methylcyclopentan, 0,3 Teilen Wasser und 1,7 Teilen Methanol gemischt. Das eingesetzte PTMEG hat die Molmasse 1700 und den Heterogenitätsquotienten M_{w}/Mₙ = 2,1. Aus den beiden entstandenen PTHF-Phasen gewinnt man 0,65 Teile PTHF 2500 (M_{w}/Mₙ = 1,8) und 0,35 Teile PTHF 900 (M_{w}/Mₙ = 1,3). Aus dem Einsatzprodukt wurden, wie im Beispiel 1 beschrieben, 0,03 Teile Kronenether abgetrennt.

### Beispiel 3

1,5 Teile THF/Ethylenoxid-Copolymere (Molmasse = 1370 Dalton, Mw/Mn = 1,9; Ethylenoxid-Anteil: 25 Gew.-%) werden bei 35°C mit 2,7 Teilen Methylcyclohexan, 2 Teilen Methanol und 1,3 Teilen Wasser gemischt und, wie in Beispiel 1 beschrieben, bei 75°C in zwei Phasen aufgetrennt. Aus der unteren Phase erhält man 0,7 Teile Copolymeres mit der Molmasse 900 Dalton, Mw/Mn = 1,3 und aus der oberen Phase 0,7 Teile Copolymeres mit der Molmasse 1900 Dalton, Mw/Mn = 1,6. An Kronenether wurden 0,1 Teile abgetrennt.

## Patentansprüche

1. Verfahren zur Fraktionierung von Tetrahydrofuran-Polymeren oder Tetrahydrofuran-Alkylenoxid-Copolymeren,
**dadurch gekennzeichnet,**
**dass** man
(a) als Ausgangspolymer ein Tetrahydrofuran-Polymer oder Tetrahydrofuran-Alkylenoxid-Copolymer verwendet, welches durch Filmverdampfen im Vakuum bei einem Druck < 5 mbar und einer Temperatur im Bereich von 170 bis 250 °C erhalten wurde,
(b) das Ausgangspolymer mit einem Cycloalkan (a), Methanol (b) und Wasser (c) bei einer Temperatur im Bereich von 0 °C bis 40 °C vermischt und
(c) die beim Mischen gebildeten zwei separaten Phasen bei einer Temperatur von 40 °C bis 80 °C voneinander in Fraktionen trennt, wobei die Polydispersität M_{w}/Mₙ der gewonnenen Produkt-Polymerfraktionen geringer ist als die Polydispersität M_{w}/Mₙ des Ausgangspolymers, und
wobei die Phasentrennung bei einer Temperatur erfolgt, die mindestens 10 °C höher ist, als die Mischtemperatur in Schritt (b).

2. Verfahren nach Anspruch 1,
**dadurch gekennzeichnet,**
**daß** man ein Tetrahydrofuran-Polymer oder ein Tetrahydrofuran-Alkylenoxid-Copolymer in Fraktionen trennt, die jeweils eine Polydispersität M_{w}/Mₙ aufweisen, die um mindestens 5 % geringer ist als die Polydispersität M_{w}/Mₙ des Ausgangspolymers.

3. Verfahren nach einem der vorhergehenden Ansprüche,
**dadurch gekennzeichnet,**
**daß** man ein Ausgangspolymer mit einer mittleren Molmasse von 800 bis 3000 Dalton verwendet.

4. Verfahren nach einem der vorhergehenden Ansprüche,
**dadurch gekennzeichnet,**
**daß** man das Ausgangspolymer in zwei Fraktionen trennt, deren mittlere Molmassen M +A und M-A betragen, wobei M 800 bis 3000 Da und A und 200 bis 1500 Da darstellt.

5. Verfahren nach einem der vorhergehenden Ansprüche,
**dadurch gekennzeichnet,**
**daß** der Anteil an Cycloalkan (a), Methanol (b) und Wasser (c) im Gesamtgemisch jeweils von 1 bis 95 Gew.-% beträgt.

6. Verfahren nach einem der vorhergehenden Ansprüche,
**dadurch gekennzeichnet,**
**daß** das Cycloalkan (a), Methanol (b) und Wasser (c) im Verhältnis 1 bis 10 Gewichtsteile (a):1 bis 10 Gewichtsteile (b):1 bis 10 Gewichtsteile (c) eingesetzt werden.

7. Verfahren nach einem der vorhergehenden Ansprüche,
**dadurch gekennzeichnet,**
**daß** das Cycloalkan in einer Menge von 0,2 Gewichtsteile bis 5 Gewichtsteile pro Gewichtsteil des Ausgangspolymers verwendet wird.

8. Verfahren nach einem der vorhergehenden Ansprüche,
**dadurch gekennzeichnet,**
**daß** als Cycloalkan (a) Cyclopentan, Methylcyclopentan, Cyclohexan oder/und Methylcyclohexan verwendet wird.

9. Verfahren nach einem der vorhergehenden Ansprüche,
**dadurch gekennzeichnet,**
**dass** ein Tetrahydrofuran-Alkylenoxid-Copolymer verwendet wird, welches als Alkylenoxid Ethylenoxid- und/oder Propylenoxideinheiten umfasst.

10. Verfahren nach einem der vorhergehenden Ansprüche,
**dadurch gekennzeichnet,**
**dass** die Tetrahydrofuran-Polymere oder Tetrahydrofuran-Alkylenoxid-Copolymere aus den getrennten Phasen durch Eindampfen gewonnen werden.

11. Verfahren nach Anspruch 10,
**dadurch gekennzeichnet,**
**dass** das beim Eindampfen abgetrennte Cycloalkan, Methanol und Wasser ohne weitere Reinigung erneut für eine Fraktionierung verwendet werden.

12. Verfahren nach einem der vorhergehenden Ansprüche,
**dadurch gekennzeichnet,**
**dass** man nach der Phasentrennung die obere Phase um 20 bis 50 °C abkühlt und bei dieser Temperatur eine weitere Phasentrennung durchführt.

## Claims

1. A process for fractionating tetrahydrofuran polymers or copolymers of tetrahydrofuran with alkylene oxides,
**characterized in that**
one
(a) uses a tetrahydrofuran polymer or a copolymer of tetrahydrofuran and alkylene oxide as starting polymer, which was obtained by vacuum film evaporation under a pressure of < 5 mbar and at a temperature in the range from 170 to 250 °C,
(b) mixes the starting polymer with a cyclane (a), methanol (b) and water (c) at a temperature in the range from 0 °C to 40 °C and
(c) separates - at a temperature in the range from 40 °C to 80 °C - the two different phases formed during mixing into fractions, with the polydispersity M_{w}/Mₙ of the product polymer fractions obtained being less than the polydispersity M_{w}/Mₙ of the starting polymer, and the phase separation being effected at a temperature that is at least 10 °C higher than the mixing temperature in step (b).

2. The process of claim 1,
**characterized in that**
one separates a tetrahydrofuran polymer or a copolymer of tetrahydrofuran and alkylene oxide into fractions each of which has a polydispersity M_{w}/Mₙ that is at least 5 % less than the polydispersity M_{w}/Mₙ of the starting polymer.

3. A process according to one of the preceding claims,
**characterized in that**
one uses a starting polymer with a molar mass average of 800 to 3000 Da.

4. The process according to one of the preceding claims,
**characterized in that**
one separates the starting polymer into two fractions of molar-mass averages M + A and M - A, where M is 800 to 3000 Da and A is 200 to 1500 Da.

5. The process according to one of the preceding claims,
**characterized in that**
the proportions of cyclane (a), methanol (b) and water (c) in the overall mixture are each from 1 to 95 wt %.

6. The process according to one of the preceding claims,
**characterized in that**
the cyclane (a), methanol (b) and water (c) are used in a ratio of 1 to 10 parts by weight (a) : 1 to 10 parts by weight (b) : 1 to 10 parts by weight (c).

7. The process according to one of the preceding claims,
**characterized in that**
the cyclane is used in a quantity from 0.2 parts by weight to 5 parts by weight per part by weight of starting polymer.

8. The process according to one of the preceding claims,
**characterized in that**
cyclopentane, methylcyclopentane, cyclohexane and/or methylcyclohexane is used as cyclane (a).

9. The process according to one of the preceding claims,
**characterized in that**
a copolymer of tetrahydrofuran and alkylene oxide is used which comprises ethylene oxide and/or propylene oxide units as alkylene oxide.

10. The process according to one of the preceding claims,
**characterized in that**
the tetrahydrofuran polymers or copolymers of tetrahydrofuran with alkylene oxide are isolated from the separated phases by way of boildown.

11. The process of claim 10,
**characterized in that**
the cyclane, methanol and water separated off during boildown are used again, without additional purification, for fractionation.

12. The process according to one of the preceding claims,
**characterized in that**
after phase separation, the upper phase is cooled by 20 to 50 °C and then subjected at this temperature to a further phase separation step.

## Revendications

1. Procédé de fractionnement de polymères de tétrahydrofuranne ou de copolymères de tétrahydrofuranne-oxyde d'alkylène, **caractérisé en ce que**
(a) on utilise comme polymère de départ un polymère de tétrahydrofuranne ou un copolymère de tétrahydrofuranne-oxyde d'alkylène qui a été obtenu par évaporation en film sous vide sous une pression inférieure à 5 mbar et à une température dans la gamme de 170 à 250°C,
(b) on mélange le polymère de départ avec un cycloalcane (a), du méthanol (b) et de l'eau (c) à une température dans la gamme de 0°C à 40°C, et
(c) on sépare l'une de l'autre, en fractions, à une température de 40°C à 80°C, les deux phases séparées formées lors du mélange, la polydispersité M_{w}/Mₙ des fractions de polymère produit obtenues étant inférieure à la polydispersité M_{w}/Mₙ du polymère de départ, et la séparation des phases s'effectuant à une température qui est supérieure d'au moins 10°C à la température de mélange de l'étape (b).

2. Procédé selon la revendication 1, **caractérisé en ce que** l'on sépare un polymère de tétrahydrofuranne ou un copolymère de tétrahydrofuranne-oxyde d'alkylène en fractions ayant chacune une polydispersité M_{w}/Mₙ qui est inférieure d'au moins 5 % à la polydispersité M_{w}/Mₙ du polymère de départ.

3. Procédé selon l'une des revendications précédentes, **caractérisé en ce que** l'on utilise un polymère de départ ayant une masse molaire moyenne de 800 à 3 000 daltons.

4. Procédé selon l'une des revendications précédentes, **caractérisé en ce que** l'on sépare le polymère de départ en deux fractions dont les masses molaires moyennes s'élèvent à M+A et M-A, où M représente 800 à 3 000 Da et A représente 200 à 1 500 Da.

5. Procédé selon l'une des revendications précédentes, **caractérisé en ce que** la proportion de cycloalcane (a), de méthanol (b) et d'eau (c) dans le mélange total est de 1 à 95 % en masse.

6. Procédé selon l'une des revendications précédentes, **caractérisé en ce que** l'on utilise le cycloalcane (a), le méthanol (b) et l'eau (c) en un rapport de 1 à 10 parties en masse de (a) : 1 à 10 parties en masse de (b) : 1 à 10 parties en masse de (c).

7. Procédé selon l'une des revendications précédentes, **caractérisé en ce que** l'on utilise le cycloalcane en une quantité de 0,2 partie en masse à 5 parties en masse par partie en masse du polymère de départ.

8. Procédé selon l'une des revendications précédentes, **caractérisé en ce que** l'on utilise comme cycloalcane (a) du cyclopentane, du méthylcyclopentane, du cyclohexane et/ou du méthylcyclohexane.

9. Procédé selon l'une des revendications précédentes, **caractérisé en ce que** l'on utilise un copolymère de tétrahydrofuranne-oxyde d'alkylène comprenant comme oxyde d'alkylène des unités d'oxyde d'éthylène et/ou d'oxyde de propylène.

10. Procédé selon l'une des revendications précédentes, **caractérisé en ce que** l'on obtient les polymères de tétrahydrofuranne ou les copolymères de tétrahydrofuranne-oxyde d'alkylène par évaporation à partir des phases séparées.

11. Procédé selon la revendication 10, **caractérisé en ce que** le cycloalcane, le méthanol et l'eau séparés lors de l'évaporation sont réutilisés sans autre purification pour un fractionnement.

12. Procédé selon l'une des revendications précédentes, **caractérisé en ce que**, après la séparation des phases, on refroidit la phase supérieure à 20 à 50°C et on effectue une autre séparation de phases à cette température.
